# EUROPÄISCHE PATENTSCHRIFT

(11) **EP 1 230 780 B1**
(45) Veröffentlichungstag und Bekanntmachung des Hinweises auf die Patenterteilung: **09.03.2005**
(21) Anmeldenummer: 99974203.4
(22) Anmeldetag: 19.11.1999
(51) Int. Cl.: H04L 29/06, G06K 19/073, G07F 7/10

(54) **ANPASSBARE CHIPKARTE**
ADAPTABLE CHIP CARD
CARTE A PUCE ADAPTABLE

(43) Veröffentlichungstag der Anmeldung: 14.08.2002
(73) Patentinhaber: Swisscom Mobile AG, 3050 Bern (CH)
(72) Erfinder: HUBER, Adriano, CH-6600 Locarno (CH)
(74) Vertreter: P&TS Patents & Technology Surveys SA
(86) Internationale Anmeldenummer: PCT/CH1999/000553
(87) Internationale Veröffentlichungsnummer: WO 2001/039464

(56) Entgegenhaltungen:
- WO-A-98/19237
- CONNOLLY E: "AUTOMATING THE HOME - AND PAYING FOR IT" COMPUTER DESIGN,US,PENNWELL PUBL. LITTLETON, MASSACHUSETTS, Bd. 26, Nr. 13, Juli 1987 (1987-07), Seiten 103-104,109-110,112, XP000811990 ISSN: 0010-4566
- GOLDBERG L: "INFORMATION APPLIANCES: FROM WEB PHONES TO SMART REFRIGERATORS" ELECTRONIC DESIGN,US,PENTON PUBLISHING, CLEVELAND, OH, Bd. 46, Nr. 7, 23. März 1998 (1998-03-23), Seiten 69-70,74,76,78, XP000780456 ISSN: 0013-4872

## Beschreibung

Die vorliegende Erfindung betrifft eine Chipkarte, insbesondere eine Chipkarte, die nach ihrer Herstellung und Verteilung angepasst werden kann.

Chipkarten kommunizieren mit externen Vorrichtungen, beispielsweise mit einem Mobiltelefon, über eine logische Schnittstelle, die man oft als API (Application Protocol Interface) bezeichnet. Wenn die externe Vorrichtung auf eine Funktionalität der Chipkarte zugreifen will, sendet sie einen Befehl über diese API-Schnittstelle. Die Karte, die einen Befehl von der externen Vorrichtung erhält, kann ihn dekodieren und eine entsprechende Aktion auslösen.

Solche Befehle sind üblicherweise als strukturierte Dataeinheiten kodiert, die man APDU (Application Packet Data Unit) nennt. Ein APDU besteht üblicherweise aus einem Vorsatz ("Header") und einem Inhaltsteil ("Body"), wobei der Vorsatz die auszuführende Instruktion und die Instruktionsparameter angibt und der (nicht immer vorhandene) Inhaltsteil Daten enthält. Dieses Protokoll ist unter anderem in der ISO-Norm ISO/IEC 7816, Teil 4 beschrieben. Weitere Befehle werden im systemspezifische Dokumente spezifiziert (z.B. GSM 11.11, GSM 11.14).

Die Definition der API-Schnittstelle und die Standardisierung der APDU die von Chipkarten verstanden werden, erfolgt meistens in Standardisierungsgremien oder wird von einzelnen Firmen vorgeschlagen. Aus Kompatibilitätsgründen zwischen Chipkarten und Vorrichtungen von verschiedenen Hersteller ist eine starke internationale Standardisierung der API-Schnittstelle ein erstrebenswertes Ziel.

Die Standardisierung von APDU-Befehlen ist jedoch ein Prozess, der oft langsamer abläuft als die technische Entwicklung der Chipkarten. Aus diesem Grund können die konventionellen Chipkarten nicht alle Wünsche der Anwender und insbesondere nicht alle Wünsche der Dienstanbieter oder Telekommunikationsnetzbetreiber erfüllen. Funktionalitäten einer Chipkarte die technisch schon realisierbar und manchmal sogar in der Karte implementiert sind, können meistens erst nach der nächsten Standardisierung der APDU-Spezifikation angeboten werden.

WO9819237 (Schlumberger) beschreibt eine Chipkarte mit einer Java virtuellen Maschine, in welcher verschiedene Anwendungen in einer EEPROM abgelegt sind. Anwendungen können somit geändert oder ersetzt werden. Der Instruktionen-Handler ist jedoch im ROM abgelegt, so dass keine neue Instruktionen zum bestehenden Instruktionensatz hingefügt werden können.

Es ist daher ein Ziel der vorliegenden Erfindung, ein Verfahren anzubieten, mit welchem eine externe Vorrichtung auf Funktionalitäten einer Karte zugreifen kann, für welche die APDU erst nach der Herstellung der Chipkarte standardisiert worden sind.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

insbesondere werden diese Ziele dadurch erreicht, dass die Funktionalität die durch die Chipkarte zur Verfügung gestellt wird wenn eine Dataeinheit über die API-Schnittstelle empfangen wird, von der Applikationslogik im EEPROM-Teil der Chipkarte dekodiert, interpretiert und ausgeführt wird.

Dadurch kann der sogenannte APDU-Handler in der Chipkarte, welcher die Reaktion auf ankommende Dataeinheiten bestimmt zu jedem Zeitpunkt geändert, beispielsweise ergänzt, erneuert oder ersetzt werden, um neudefinierte, proprietäre oder nicht standardisierte APDU zu berücksichtigen.

Im folgenden werden anhand der beigefügten Figuren bevorzugte Ausführungsbeispiele der Erfindung näher beschrieben:
Figur 1: schematische Ansicht eines Systems mit einer konventionellen Chipkarte.
Figur 2: schematische Ansicht eines erfindungsgemässen APDU-Befehls.
Figur 3: schematische Ansicht eines Systems mit einer ersten Variante einer erfindungsgemässen Chipkarte.
Figur 4: schematische Ansicht eines Systems mit einer zweiten Variante einer erfindungsgemässen Chipkarte.

Die nachfolgende Beschreibung bezieht sich insbesondere auf den speziellen Fall einer Chipkarte, die als Identifizierungsmodul in einem digitalen zellularen Mobiltelefon eingesetzt wird, beispielsweise eine SIM-Karte (Subscriber Identification Module) oder eine WIM-Karte (Wireless Application Protocol Identification Module), oder WIM/SM (SIM mit WIM Applikation), die beispielsweise in einem GSM (Global System for Mobile Telecommunication), WAP (Wireless Application Protocol) oder UMTS-Mobiltelefon eingesetzt werden kann. Der Fachmann wird jedoch verstehen, dass die vorliegende Erfindung auch mit anderen Typen von Chipkarten, beispielsweise mit JAVA-Card (Warenzeichen von SUN Microsystems) oder mit OpenCard-Karten, angewendet werden kann.

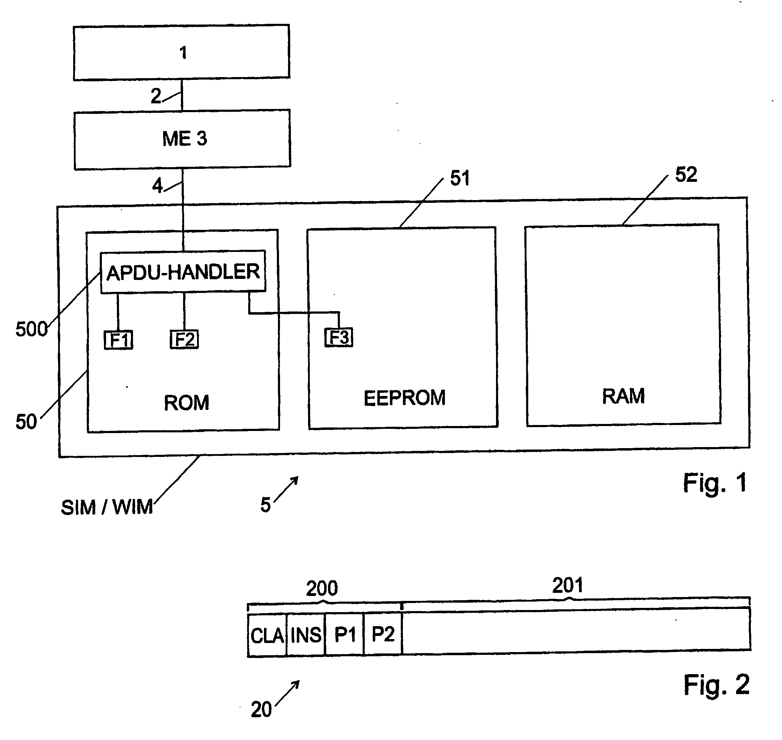

Die Figur 1 zeigt in schematischer Weise ein bekanntes konventionelles System. Das System umfasst ein Endgerät 3 (Mobile Equipment ME) und eine konventionelle SIM- oder WIM-Karte 5. Eine Anwendung 1, beispielsweise ein Browser oder ein Anwendungsprogramm, beispielsweise ein Programm von einem Dienstanbieter, wird von nicht dargestellten Datenverarbeitungsmitteln im Mobilgerät 3 ausgeführt. Die Anwendung kommuniziert mit dem Mobilgerät 3 über eine API-Schnittstelle 2 (Application Protocol Interface) welche hier nicht detailliert wird.

Das Mobilgerät 3 kommuniziert mit der SIM-Karte 5 über eine andere API-Schnittstelle 4. Das Mobilgerät 3 übernimmt üblicherweise die Rolle des Meisters der Kommunikation über diese Schnittstelle, während die SIM-Karte 5 als Sklave antwortet. Es sind aber auch Protokollvarianten bekannt (beispielsweise gemäss SIM-Toolkit i.e. GSM 11.14), in welchen die SIM-Karte zumindest temporär die Rolle des Meisters übernimmt.

Ein Schritt im API-Protokoll besteht aus der Sendung eines Befehls an die Chipkarte 5, aus der Ausführung des Befehls durch die Karte und gegebenenfalls aus der Sendung einer Antwort an das Mobilgerät 3. Über die Schnittstelle 4 werden daher entweder Befehle oder Antworten ausgetauscht. Daten können sowohl in den Befehlen und/oder in den Antworten enthalten sein.

Diese Fragen und Befehle werden mit standardisierten Protokoll-Dataeinheiten (APDU - Application Protocol Data Unit) kodiert. Einige standardisierte APDU für ISO-Chipkarten sind in der Norm ISO/IEC 7816-4:1995(E) beschrieben. Zusätzliche APDU wurden für SIM-Karten und für WIM-Karten definiert, um die Funktionalität der API-Schnittstelle 4 zu erweitern.

Die Figur 2 zeigt die typische Struktur einer Dataeinheit (APDU) 20. Die Dataeinheit umfasst einen obligatorischen Vorsatz (Header) 200 mit vier Bytes und einen nicht immer vorhandenen Inhaltsteil (Body) 201 mit einer variablen Länge.

Der Vorsatz enthält ein erstes Byte (CLA), das verwendet wird, um unter anderem anzugeben, welche API-Version die Dataeinheit befolgt. Ein zweites Byte (INS) gibt die Instruktion an, die von der Chipkarte 5 ausgeführt werden muss oder gerade ausgeführt wurde. Je nach Instruktionen können noch zwei Parameter P1 und P2 angegeben werden. Wenn eine Instruktion keinen Parameter P1 und/oder P2 verlangt, muss dieser Parameter auf Null gesetzt werden.

Der optionale inhaltsteil 201 enthält Daten und mindestens ein Byte, das die Länge dieser Daten und/oder die maximale Länge der erwarteten Antwort angibt.

Die konventionelle Chipkarte 5 umfasst im allgemeinen ein ROM 50, ein EEPROM 51 und ein RAM 52, sowie nicht dargestellte Datenverarbeitungsmittel. Die ROM beträgt heutzutage typischerweise 64 Kilobytes und enthält üblicherweise das Betriebssystem, eine Java virtuelle Maschine (JVM, Warenzeichen von SUN), und verschiedene Komponenten F1, F2, .., beispielsweise JavaBeans, Applets oder Programme, die verschiedene Funktionalitäten der Karte anbieten können. Im EEPROM 51 werden auch Komponenten abgelegt, beispielsweise Komponenten die als Applet nach der Personalisierung der Karte ferngeladen wurden sowie persönliche Daten der Benutzers, beispielsweise ein Telefonverzeichnis, ein elektronisches Zertifikat, usw. Die EEPROM kann beispielsweise 16 oder 32 Kilobytes umfassen. Im RAM 52 werden temporäre Daten abgelegt, beispielsweise temporäre Variablen. Weiter können im EEPROM ft Applikationen (Applets) gespeichert werden.

Ein Dataeinheit-Automat 500, öfter APDU-Handler genannt, empfängt die APDU des Mobilgerätes 3 welche über die API-Schnittstelle 4 empfangen wurden und analysiert den Vorsatz 200, insbesondere die Bytes CLA und INS, um den Befehl an die betroffene Komponente F1, F2, .. welche den Befehl ausführen kann, weiterzuleiten. Der APDU-Handler 500 kann dann die Antwort dieser Komponente empfangen und diese Antwort über die API-Schnittstelle 4 an das Mobilgerät 3 senden.

Der APDU-Handler 500 wird üblicherweise als Programm im ROM-Teil 50 implementiert. Das Programm wird von den Datenverarbeitungsmitteln ausgeführt wenn ein ankommendes APDU detektiert wird. Es ist aber auch möglich den APDU-Handler als Schaltung zu realisieren. Ein Problem mit dieser Konfiguration ist, dass das Mobilgerät 3 und die Anwendung auf neue Funktionalitäten der Karte, die beispielsweise durch neue Komponenten G1, G2,.. im ROM, im EEPROM oder im RAM zur Verfügung gestellt werden, nicht zugreifen können, solange kein APDU 20 für diese Funktionalität standardisiert wird. Auch wenn ein solches APDU definiert wird, können bereits verteilte Chipkarten 5 diese Funktionalität nicht anbieten, wenn sie erst über einen konventionellen APDU-Handler 500 verfügen, der dieses später definierte APDU nicht erkennen kann - auch wenn die benötigte Komponente G1, G2, .. in der Karte enthalten ist. Aus diesen Gründen können neue Funktionalitäten die durch die dauernde und schnelle Entwicklung der Chipkarten möglich wären, nur langsam verbreitet werden.

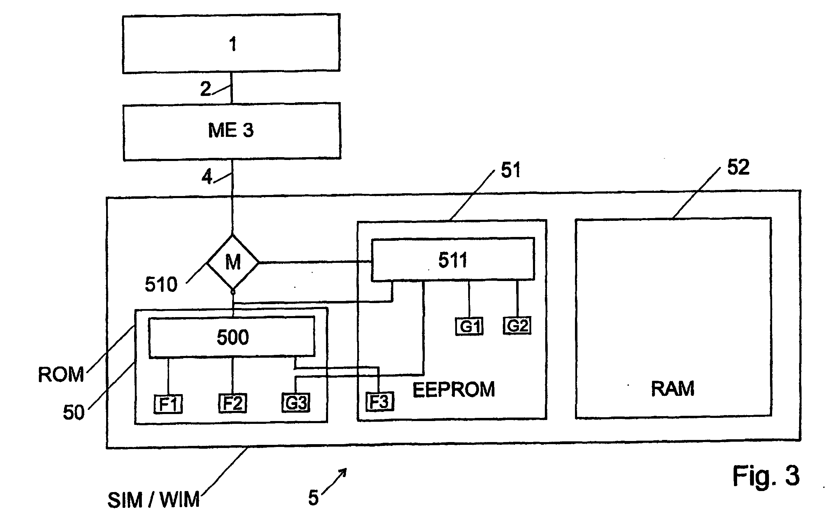

Die Figur 3 zeigt ein Beispiel einer ersten Variante einer erfindungsgemässen Chipkarte 5, beispielsweise eine SIM oder WIM-Karte, die diese Probleme lösen kann. In dieser Variante weist die Chipkarte ein Test-Modul 510 auf, das alle über die API-Schnittstelle 4 empfangenen APDU 20 prüft. Falls das Test-Modul detektiert, dass das empfangene APDU bereits bei der Herstellung des ROM-Teils 50 vorgesehen war, leitet es dieses APDU an einen konventionellen APDU-Handler 500 im ROM-Teil 50, der die entsprechende Funktionalität F1, F2, .. wie oben beschrieben zur Verfügung stellt. Wenn das Test-Modul dagegen detektiert, dass das empfangene APDU 20 bei der Herstellung des ROM 50 nicht vorgesehen war, beispielsweise weil es erst in einer späteren Version der API-Schnittstelle 4 standardisiert wurde, leitet es dieses APDU an einen neuen, modifizierten APDU-Handler 511 weiter, der die für dieses neue APDU vorgesehene Komponente G1, G2, G3,... im ROM oder im EEPROM abruft.

Die Prüfung, ob das empfangene APDU zum konventionellen APDU-Handler 500 oder zum neuen APDU-Handler 511 gesendet werden soll, kann auf verschiedene Weisen erfolgen. In einer ersten Variante enthält das Modul 510 eine Liste von APDU, die an den konventionellen APDU-Handler 500 geleitet werden sollen und/oder eine Liste von neudefinierten APDU, die für das neue APDU bestimmt sind. Diese Liste befindet sich vorzugsweise auch im EEPROM und kann somit angepasst werden. In einer anderen Variante leitet der APDU-Handler 500 das empfangene APDU nur dann an den neuen APDU-Handler 511, wenn er eine Fehlermeldung vom konventionellen APDU-Handler erhalten hat, nämlich wenn der konventionelle APDU-Handler dieses APDU nicht bearbeiten kann. In einer weiteren Variante kann das Test-Modul 510 anhand des APDU, beispielsweise anhand des Bytes CLA oder INS selbst bestimmen, an welchen APDU-Handler das empfangene APDU 20 weitergeleitet werden soll. In noch einer anderen Variante werden neu definierte APDU die an den neuen APDU-Handler 511 geleitet werden sollen speziell markiert, beispielsweise indem sie fehlgebraucht werden, beispielsweise indem sie spezielle, unmögliche oder sehr unwahrscheinliche Parameter P1, P2 oder Daten 201 enthalten.

Der neue APDU-Handler 511 befindet sich vorzugsweise im EEPROM 51. Auf diese Weise kann er auch nach der Herstellung des ROMS 50 geändert werden, um beispielsweise den Zugriff auf neue, in der Zwischenzeit implementierte Komponenten G1, G2, G3 zu gewährleisten. Vorzugsweise befindet sich auch das Test-Modul 510 im EEPROM, damit die Testbedingungen nach der Herstellung des ROMS und/oder nach der Verteilung der Chipkarten festgelegt werden können. Das Test-Modul 510 könnte sich aber auch im ROM 50 oder gar im RAM 52 befinden.

Die neuen Komponenten G1, G2, G3, .. können im ROM 50 oder im EEPROM 51 enthalten sein. Es können ausserdem temporär im RAM 52 abgelegte Komponenten zur Verfügung gestellt werden. Wenn die Chipkarte 5 wenigstens temporär die Rolle des Meisters der Schnittstelle 4 spielen kann, kann sie mit diesem Mechanismus ausserdem auf Funktionalitäten, beispielsweise auf Applets, zugreifen, die vom Mobilgerät 3 zur Verfügung gestellt werden. Es ist sogar möglich, dass der APDU-Handler 501 auf Komponenten zugreift, die sich in einer externen Vorrichtung befinden, welche beispielsweise über eine kontaktlose Schnittstelle, beispielsweise eine infrarote, RFID oder Bluetooth-Schnittstelle, mit dem Mobilgerät 3 verbunden ist.

In einer nicht dargestellten Variante der Erfindung wird der APDU-Handler 500 im ROM-Teil 50 modifiziert, damit er automatisch alle nicht bekannten empfangenen APDU an einen neuen anpassbaren APDU-Handler 511 im EEPROM 51 weiterleitet. Diese Variante erlaubt es, auf das Test-Modul 510 zu verzichten: was vom konventionellen APDU-Handler 500 nicht bearbeit werden kann, wird automatisch dem neuen APDU-Handler 511 übermittelt.

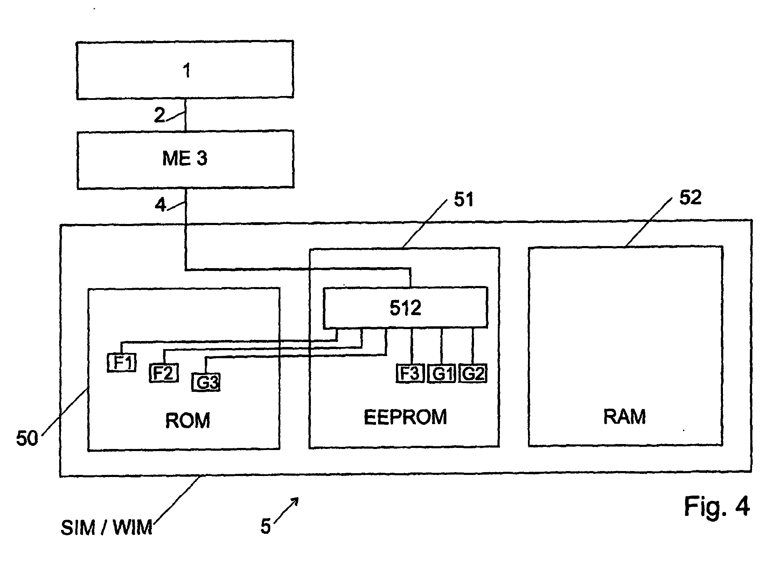

Die Figur 4 zeigt eine weitere Variante der erfindunsgemässen Chipkarte. Gleiche oder vergleichbare Merkmale werden in allen Figuren mit gleichen Bezugszeichen verwendet und werden nicht mehr beschrieben, solange dies nicht benötigt wird. In dieser Variante wird der normale APDU-Handler der sich üblicherweise im ROM 50 befindet durch einen modifizierten APDU-Handler 512 im EEPROM ersetzt. Auf diese Weise kann er zu jedem Zeitpunkt angepasst werden damit neudefinierte APDU berücksichtigt werden können.

Diese Variante erlaubt eine grosse Flexibilität, da neue Komponenten G1, G2, G3 und neue APDU zu jeder Zeit in der Karte 5 implementiert werden können.

In einer nicht dargestellten Variante kann sich der modifizierte APDU-Handler auch im RAM 52 befinden, damit er einfach durch das Betriebssystem der Chipkarte oder durch die Anwendung 1 geändert werden kann.

Auf diese Weise kann eine Anwendung 1 auf Funktionalitäten einer Chipkarte 5 zugreifen, die bei der Herstellung der Karte noch nicht vorgesehen waren und für die kein APDU standardisiert worden ist, beispielsweise auf Funktionalitäten G1, G2, G3.., die erst bei der Personalisierung oder sogar nach der Verteilung der Karte über eine Luftschnittstelle als Applet ferngeladen wurden.

Beispielsweise kann das Test-Modul 510 und/oder der neue APDU-Handler 511 bzw. 512 mit einer Meldung über ein Mobilfunknetz angepasst werden, beispielsweise mit einer SMS-Meldung, einer USSD-Meldung, einem GPRS-Paket, einem IP-Paket, usw.. Das Test-Modul 510 und/oder der APDU-Handler kann aber auch von einer Anwendung 1, beispielsweise einem Browser, welcher beispielsweise über die Luftschnittstelle oder mit einem Datenträger geladen wurde, geändert oder ergänzt werden.

In einer Variante der Erfindung kann jedes APDU die Durchführung von mehreren verschiedenen Funktionen in der Chipkarte 5 auslösen. Ein spezielles APDU definiert, in welchem Zustand sich die Karte befindet und welches Set von Funktionen verwendet werden muss. Diese Variante erlaubt durch das Senden eines einzigen APDU alle Funktionalitäten der Chipkarte zu ersetzen, indem einkommende APDU von einem neuen APDU-Handler bearbeitet werden. Beispielsweise können auf diese Weise alle Parameter und Komponenten die im EEPROM 51 abgelegt sind temporär ersetzt werden. Ein anderes spezielles APDU kann dann die Chipkarte in ihren normalen Zustand zurückbringen.

## Patentansprüche

1. Chipkarte (5), die über eine logische Schnittstelle (4) mit einer externen Vorrichtung (3) kommunizieren kann,
wobei standardisierte Dataeinheiten (20) für diese Kommunikation definiert sind,
wobei die Chipkarte über ein ROM und über ein EEPROM verfügt,
wobei verschiedene Komponenten (F1, F2, ..G1, G2..) vorgesehen sind, die verschiedene Funktionalitäten zur Verfügung stellen,
wobei ein Modul (500, 510, 511, 512) vorgesehen ist, um zu bestimmen, welche Komponente abgerufen wird, wenn eine bestimmte Dataeinheit (20) über die benannte logische Schnittstelle (4) empfangen wird,
**dadurch gekennzeichnet, dass** das benannte Modul mindestens teilweise im benannten EEPROM abgelegt ist.

2. Chipkarte gemäss dem vorhergehenden Anspruch, wobei das benannte Modul ein Test-Modul (510) umfasst, das derart ausgeführt ist, dass es bestimmte empfangene Dataeinheiten an einen konventionellen Application Packet Data Unit APDU-Handler (500) im ROM (50) und andere Dataeinheiten (20) an einen anderen APDU-Handler (511) weiterleiten kann.

3. Chipkarte gemäss dem vorhergehenden Anspruch, in welchem das benannte Test-Modul (510) im ROM (50) abgelegt ist.

4. Chipkarte gemäss dem Anspruch 2, in welchem das benannte Test-Modul (510) im EEPROM (51) abgelegt ist.

5. Chipkarte gemäss einem der vorhergehenden Ansprüche, in welchem das benannte Test-Modul (510) derart ausgeführt ist, dass es anhand des Vorsatzes (200) der Dataeinheit (20) erkennen kann, wohin die Dataeinheit weitergeleitet werden soll.

6. Chipkarte gemäss dem vorhergehenden Anspruch, in welchem der benannte Vorsatz mindestens folgende Bytes umfasst:
ein Byte (CLA), das die Klasse der Dataeinheit angibt,
ein Byte, das die auszuführende Instruktion angibt,
mindestens zwei Bytes, die mindestens zwei Parametern für die benannte auszuführende Instruktion entsprechen,
wobei das benannte Test-Modul (510) derart ausgeführt ist, dass es anhand des benannten Parameters des Vorsatzes (200) der Dataeinheit (20) erkennen kann, wohin die Dataeinheit weitergeleitet werden soll.

7. Chipkarte gemäss dem Anspruch 5, in welchem der benannte Vorsatz mindestens folgende Bytes umfasst:
ein Byte (CLA), das die Klasse der Dataeinheit angibt,
ein Byte, das die auszuführende Instruktion angibt,
zwei Bytes, die zwei Parametern für die benannte auszuführende Instruktion entsprechen,
wobei das benannte Test-Modul (510) derart ausgeführt ist, dass es anhand des benannten Parameters des Vorsatzes (200) der Dataeinheit (20) erkennen kann, wohin die Dataeinheit weitergeleitet werden soll.

8. Chipkarte gemäss einem der Ansprüche 1 bis 4, in welcher das benannte Test-Modul (510) derart ausgeführt ist, dass es anhand des Inhaltsteils (200) der Dataeinheit (20) erkennen kann, wohin die Dataeinheit weitergeleitet werden soll.

9. Chipkarte gemäss dem Anspruch 1, die einen APDU-Handler (512) im EEPROM (51) umfasst, der derart ausgeführt ist, dass er alle empfangenen Dataeinheiten (20) an die zuständige Komponente (F1, G1, F2, G2, ..) in der benannten Chipkarte (5) weiterleiten kann.

10. Chipkarte gemäss dem vorhergehenden Anspruch, in welchem der benannte APDU-Handler im EEPROM (51) abgelegt ist.

11. Chipkarte gemäss dem Anspruch 9, in welchem der benannte APDU-Handler im RAM (52) abgelegt ist.

12. Chipkarte gemäss dem Anspruch 1, die einen APDU-Handler (512) im ROM (50) umfasst, der derart ausgeführt ist, dass er alle unbekannten empfangenen Dataeinheiten (20) an einen zweiten APDU-Handler im EEPROM weiterleiten kann.

13. Chipkarte gemäss einem der vorhergehenden Ansprüche, die eine SIM-Karte ist.

14. Chipkarte gemäss dem vorhergehenden Anspruch, die eine WIM-Karte ist.

15. Verfahren, um eine Chipkarte (5) nach Ihrer Herstellung an eine neue Standardisierung der API-Schnittstelle anzupassen, **dadurch gekennzeichnet, dass** im EEPROM (51) der Chipkarte ein Modul (510; 512) angepasst wird, welches bestimmt, welche Komponente abgerufen wird, wenn eine bestimmte Dataeinheit (20) über die benannte API Schnittstelle (4) empfangen wird.

16. Verfahren gemäss dem vorhergehenden Anspruch, in welchem das benannte Modul (510; 512) im EEPROM mit einer Meldung über ein Mobilfunknetz angepasst wird.

17. Verfahren gemäss dem vorhergehenden Anspruch, in welchem die benannte Meldung eine SMS-Meldung ist.

18. Verfahren gemäss dem Anspruch 16, in welchem die benannte Meldung eine USSD-Meldung ist.

19. Verfahren gemäss dem Anspruch 16, in welchem die benannte Meldung ein GPRS-Paket ist.

20. Verfahren gemäss dem Anspruch 16, in welchem die benannte Meldung ein IP-Paket ist.

## Claims

1. Chip card (5) capable of communicating with an external device (3) over a logical interface (4),
standardized data units (20) being defined for this communication,
the chip card having a ROM and an EEPROM,
different components (F1, F2, ... G1, G2...) being provided for making available different functionalities,
a module (500, 510, 511, 512) being provided for determining which component is called up when a certain data unit (20) is received over said logical interface (4),
**characterized in that** said module is stored at least partially in said EEPROM.

2. Chip card according to the preceding claim, said module comprising a test module (510) realised in such a manner that it is able to forward determined received data units to a conventional Application Packet Data Unit APDU handler (500) in the ROM (50) and other data units (20) to another APDU handler (511).

3. Chip card according to the preceding claim, wherein said test module (510) is stored in the ROM (50).

4. Chip card according to claim 2, in which said test module (510) is stored in the EEPROM (51).

5. Chip card according to one of the preceding claims, wherein said test module (510) is realised in a manner such that it can recognize on the basis of the header (200) of the data unit (20) whereto the data unit is to be forwarded.

6. Chip card according to the preceding claim, wherein said header contains at least the following bytes:
one byte (CLA) indicating the data unit class,
one byte indicating the instruction that is to be executed,
at least two bytes corresponding to at least two parameters for the instruction to be executed,
said test module (510) being realised in a manner such that it can recognize on the basis of said parameters of the header (200) of the data unit (20) whereto the data unit is to be forwarded.

7. Chip card according to claim 5, wherein said header contains at least the following bytes:
one byte (CLA) indicating the data unit class,
one byte indicating the instruction that is to be executed,
two bytes corresponding to two parameters for the instruction to be executed,
said test module (510) being realised in a manner such that it can recognize on the basis of said parameters of the header (200) of the data unit (20) whereto the data unit is to be forwarded.

8. Chip card according to one of the claims 1 to 4, wherein said test module (510) is realised in a manner such that it can recognize on the basis of the header (200) of the data unit (20) whereto the data unit is to be forwarded.

9. Chip card according to claim 1, comprising an APDU handler (512) in the EEPROM (51) realised in a manner such that it can forward all the received data units (20) to the appropriate component (F1, G1, F2, G2, ...) in said chip card (5).

10. Chip card according to the preceding claim, wherein said APDU handler is stored in the EEPROM (51).

11. Chip card according to claim 9, wherein said APDU handler is stored in the RAM (52).

12. Chip card according to claim 1, comprising an APDU handler (512) in the ROM (50) realised in a manner such that it can forward all unknown received data units (20) to a second APDU handler in the EEPROM.

13. Chip card according to one of the preceding claims, being a SIM card.

14. Chip card according to the preceding claim, being a WIM card.

15. Method for adapting a chip card (5) after its manufacture to a new standardization of the API interface, **characterized in that** a module (510; 512) in the EEPROM (51) of the chip card is adapted that determines which component is called up when a certain data unit (20) is received over said API interface (4).

16. Method according to the preceding claim, wherein said module (510; 512) in the EEPROM is adapted with a message over a mobile radio network.

17. Method according to the preceding claim, wherein said message is an SMS message.

18. Method according to claim 16, wherein said message is a USSD message.

19. Method according to claim 16, wherein said message is a GPRS packet.

20. Method according to claim 16, wherein said message is an IP packet.

## Revendications

1. Carte à puce (5) pouvant communiquer avec un dispositif externe (3) à travers une interface logique (4),
des unités d'informations (20) standardisées étant définies pour cette communication,
la carte à puce disposant d'une ROM et d'une EEPROM,
différents composants (F1, F2, ... G1, G2...) étant prévus qui fournissent différentes fonctionnalités,
un module (500, 510, 511, 512) étant prévu pour déterminer quel composant est appelé lorsqu'une unité d'information (20) déterminée est reçue à travers ladite interface logique (4),
**caractérisée en ce que** ledit module est au moins partiellement stocké dans ladite EEPROM.

2. Carte à puce selon la revendication précédente, ledit module comprenant un module de test (510) réalisé de manière à pouvoir retransmettre des unités d'information reçues déterminées à un gestionnaire d'Application Packet Data Unit APDU (500) conventionnel dans la ROM (50) et d'autres unités de données (20) à un autre gestionnaire d'APDU (511).

3. Carte à puce selon la revendication précédente, dans laquelle ledit module de test (510) est stocké dans la ROM (50).

4. Carte à puce selon la revendication 2, dans laquelle ledit module de test (510) est stocké dans l'EEPROM (51).

5. Carte à puce selon l'une des revendications précédentes, dans laquelle ledit module de test (510) est réalisé de telle manière qu'il peut reconnaître à l'aide de l'en-tête (200) de l'unité de données (20) où l'unité de données doit être retransmise.

6. Carte à puce selon la revendication précédente, dans laquelle ladite en-tête comprend au moins les octets suivants:
un octet (CLA) indiquant la classe de l'unité de données,
un octet indiquant l'instruction à exécuter,
au moins deux octets correspondant à au moins deux paramètres pour ladite instruction à exécuter,
ledit module de test (510) étant réalisé de telle manière qu'il peut reconnaître à l'aide dudit paramètre de l'en-tête (200) de l'unité de données (20) où l'unité de données doit être retransmise.

7. Carte à puce selon la revendication 5, dans laquelle ledit en-tête comprend au moins les octets suivants:
un octet (CLA) indiquant la classe de l'unité de données,
un octet indiquant l'instruction à exécuter,
deux octets correspondant à deux paramètres pour ladite instruction à exécuter.
ledit module de test (510) étant réalisé de telle manière qu'il peut reconnaître à l'aide dudit paramètre de l'en-tête (200) de l'unité de données (20) où l'unité de données doit être retransmise.

8. Carte à puce selon l'une des revendications 1 à 4, dans laquelle ledit module de test (510) est réalisé de telle manière qu'il peut reconnaître à l'aide de la partie du contenu (200) de l'unité de données (20) où l'unité de données doit être retransmise.

9. Carte à puce selon la revendication 1, comprenant un gestionnaire d'APDU (512) dans l'EEPROM (51), qui est réalisé de telle manière qu'il peut retransmettre toutes les unités de données (20) reçues au composant (F1, G1, F2, G2, ..) compétent dans ladite carte à puce (5).

10. Carte à puce selon la revendication précédente, dans laquelle ledit gestionnaire d'APDU est stocké dans l'EEPROM (51).

11. Carte à puce selon la revendication 9, dans laquelle ledit gestionnaire d'APDU est stocké dans la RAM (52).

12. Carte à puce selon la revendication 1, comprenant un gestionnaire d'APDU (512) dans la ROM (50), qui est réalisé de telle manière qu'il peut retransmettre toutes les unités de données (20) reçues inconnues à un deuxième gestionnaire d'APDU dans l'EEPROM.

13. Carte à puce selon la revendication précédente, qui est une carte SIM.

14. Carte à puce selon la revendication précédente, qui est une carte WIM.

15. Procédé pour adapter une carte à puce (5) après sa fabrication à une nouvelle standardisation de l'interface API, **caractérisé en ce que**, dans l'EEPROM (51) de la carte à puce, un module (510; 512) est adapté qui détermine quel composant est appelé lorsqu'une unité de données (20) déterminée est reçue à travers ladite interface API (4).

16. Procédé selon la revendication précédente, dans lequel ledit module (510; 512) est adapté dans l'EEPROM avec un message à travers un réseau radiomobile.

17. Procédé selon la revendication précédente, dans lequel ledit message est un message SMS.

18. Procédé selon la revendication 16, dans lequel ledit message est un message USSD.

19. Procédé selon la revendication 16, dans lequel ledit message est un paquet GPRS.

20. Procédé selon la revendication 16, dans lequel ledit message est un paquet IP.
